# EUROPÄISCHE PATENTSCHRIFT

(11) **EP 1 167 856 B1**
(45) Veröffentlichungstag und Bekanntmachung des Hinweises auf die Patenterteilung: **02.11.2005**
(21) Anmeldenummer: 01115326.9
(22) Anmeldetag: 25.06.2001
(51) Int. Cl.: F16L 25/00, F16L 37/084

(54) **Steckrastverbindung für Wellrohrschläuche**
Plug-in connector with snap-fit for corrugated hoses
Connecteur enfichable fixé par encliquetage pour tubes annelés

(30) Priorität: 27.06.2000 DE 10031166
(43) Veröffentlichungstag der Anmeldung: 02.01.2002
(73) Patentinhaber: BSH Bosch und Siemens Hausgeräte GmbH, 81739 München (DE)
(72) Erfinder: Bolduan, Edwin, 13629 Berlin (DE); Wiemer, Horst, 14532 Kleinmachnow (DE)

(56) Entgegenhaltungen:
- EP-A- 0 376 691
- DE-A- 4 409 837
- DE-A- 4 417 644
- DE-U- 29 912 947

## Beschreibung

Die vorliegende Erfindung betrifft eine Steckrastverbindung zwischen einem Ende eines Wellrohrschlauches und einem Anschlussstück, das eine wenigstens angenähert zylinderförmige Buchse und eine Haltevorrichtung aufweist, die mit mindestens zwei, bevorzugt mehreren axial verlaufenden lamellenartigen Halteelementen versehen ist, an deren einem Ende jeweils ein sich radial nach innen erstreckender und in Steckrastposition mit wellrohrseitigen Rippen in Eingriff befindlichem Rastvorsprung vorgesehen ist, der durch einen Hebelvorgang am Halteelement nach außen bewegbar und außer Eingriff mit den Rippen bringbar ist.

Bei Waschmaschinen, Waschtrocknern, Trocknern oder Geschirrspülmaschinen werden zur Wasserzuführung, im Umpumpkreislauf und bei der Abführung des Wassers bzw. der Lauge Rohre bzw. elastische Schläuche verwendet, die die einzelnen Komponenten der Wasserführung miteinander verbinden. Dabei ist es notwendig, die Rohr- bzw. Schlauchenden jeweils sicher an die Komponenten anzuschließen, insbesondere an die Außenseite der Gehäuse der vorgenannten Vorrichtungen, an Laugenpumpen, Magnetventile oder auch an in den Vorrichtungen befindliche Rücklaufbehälter.

Eine Steckrastverbindung der eingangs genannten Art ist aus DE 44 09 837 A1 bekannt. Darin ist ein formstabiles Anschlussstück mit Halteelementen in Form von sogenannten Sicherungszungen vorgesehen, die mittels Sperrvorsprüngen, das sind hakenförmige Rastnasen, in die Rillen zwischen die Rippen des Endes eines Wellrohres greifen. Zum Verbinden wird das Ende des Wellrohres in die Öffnung des Anschlussstückes geschoben, so dass die Rastnasen über die vordersten Rippen gleiten, bis sich das Wellrohrende nicht tiefer in das Anschlussstück schieben lässt. Dabei kommen die Rastnasen in einer Rille zwischen zwei Rippen des Wellrohres in Eingriff. Zum Lösen werden die Sicherungszungen, die quer zu ihrer Längsausdehnung am Gehäuse des Anschlussstückes schwenkbeweglich gelagert sind, am den Rastnasen entgegengesetzten Ende niedergedrückt, so dass sich die Rastnasen aus der Rille erheben. Dann ist das Wellrohrende wieder frei zum Herausziehen aus der Höhlung des Anschlussstückes. Von Nachteil ist dabei, dass der Wellrohr-Endabschnitt auf diesen Anwendungszweck hin nicht bewusst ausgebildet ist, so dass die Rippen des Wellrohres keine für die sichere Verrastung in Steckrastposition eindeutige und reproduzierbare Lage in Bezug auf die Rastvorsprünge der Halteelemente einnehmen können. Die Verrastung ist auf einen zufällig an der genauen Postion der Rille vorhandenen Rastvorsprung angewiesen, weil sonst zu viel Spiel in der Verbindung verbleibt. Dadurch ist die bekannte Steckrastverbindung unsicher. Außerdem gilt es, sowohl die sichere Fügung und Verrastung wie die leichte Lösung des Wellrohrs vom Anschlussstück für den Benutzer verlässlich zu gestalten.

Eine Steckrastverbindung prinzipieller Art ist auch aus DE 33 22 202 A1 bekannt. Aus diesem Dokument ist ein dichtendes Rohrverbindungsstecksystem für flüssige oder gasförmige Medien bekannt, das eine steckbare, dichte und kraftschlüssige Rohrverbindung gewährleistet. Dies wird dadurch erreicht, dass das zu verbindende Rohrende bis zum Anschlag in das mit Dichtung und Sicherung ausgestattete Anschlussteil gedrückt wird, wobei die Sicherung aus Federelementen besteht, die beim Einführen des Rohrendes durch Schrägstellen geweitet werden und mit ihrer jeweils als Keil ausgebildeten Form das Rohr halten und derart sichern, dass sich bei axialer Zugbelastung die Federelemente im Rohr verkeilen.

Nachteilig an diesem Rohrverbindungsstecksystem ist, dass zum Lösen der Verbindung ein Spezialwerkzeug nötig ist, und somit der Lösevorgang besonders aufwendig ist. Des weiteren ist von Nachteil, dass das Stecksystem nur für Rohre bzw. Schläuche mit harter Außenoberfläche geeignet ist, da bei elastischem Material die Sicherung durch die Federelemente nicht gewährleistet werden kann.

Aus DE 196 20 422 A1 ist eine Vorrichtung zum Anschluss eines elektrischen Haushaltsgerätes an ein Magnetventil bekannt. Diese Vorrichtung umfasst ein inneres Rohr für den Wasserstrom und ein äußeres, koaxial um das innere Rohr angeordnete Rohr, so dass um das wasserführende innere Rohr ein ringförmiger Hohlraum gebildet wird, in dem mindestens ein elektrisches Kabel zum Anschluss des Magnetventils an das elektrische Haushaltsgerät, im besonderen eine Geschirrspülmaschine oder eine Waschmaschine, verläuft. Die Vorrichtung umfasst bevorzugterweise drei Teilstücke, die lösbar ineinander greifen und so eine mechanische Verbindung sowie eine hydraulische und elektrische Kontinuität zwischen den jeweiligen Rohren und den Kabeln herstellen können.

Nachteilig an dieser Vorrichtung des Standes der Technik ist ihr komplizierter Aufbau, der ihre Verwendung zu Zwecken der bloßen Wasserführung als untragbar erscheinen lässt, da sich derartige Rohrverbindungssysteme nur durch sehr aufwendige und damit kostspielige Verfahren herstellen lassen. Gerade die Kompliziertheit der Form führt zu immensen Formenkosten. Die genannte Vorrichtung liefert daher keine einfache und kostengünstige Lösung, einen lediglich zur Wasserführung dienenden Schlauch an eine Geschirrspülmaschine oder eine Waschmaschine anzuschließen.

Schließlich ist aus EP-A-0 373 985 ein Schlauchverbindungssystem bekannt, das das jeweilige Schlauchende mit dem Anschlussstück durch Schrumpfschläuche verbindet. In der genannten Druckschrift werden zahlreiche Ausführungsformen dargestellt, die mehr oder weniger kompliziert sind, aber alle auf dem vorgenannten Prinzip beruhen.

Nachteilig an derartigen Verbindungen ist die komplizierte Struktur der Verbindungsstücke, die einem universellen Einsatz der beschriebenen Verbindung im Wege steht. Ein weiterer Nachteil besteht darin, dass eine derartige Verbindung nur schwer wieder gelöst werden kann, was bei einem Austausch von Teilelementen der Wasserführung hinderlich ist.

Der Erfindung liegt somit die Aufgabe zugrunde, eine Verbindung für Wellrohrschläuche, insbesondere zum Einsatz bei Waschmaschinen, Waschtrocknern, Trocknern oder Geschirrspülmaschinen, zu schaffen, die einen möglichst einfachen Verschlussmechanismus aufweist, universell einsetzbar ist, eine kostenaufwendige Montage durch Zusatzelemente zur Befestigung und Lagefixierung sowie eine aufwendige Schlauchherstellung vermeidet und auf einfache Art und Weise wieder gelöst werden kann.

Diese Aufgabe wird erfindungsgemäß durch die Merkmale des Anspruchs 1 gelöst, durch welche die Steckrastverbindung durch einen Hebelvorgang auf einfache Art und Weise gelöst werden kann, indem ein an einem Ende des Wellrohrschlauchs angebrachtes hohlzylinderförmiges Ansatzstück durch Ineinanderstecken mit der zylinderförmigen Buchse des Anschlußstückes verbunden werden kann, wobei das Anschlußstück eine Haltevorrichtung aufweist, die mindestens zwei, bevorzugt mehrere, axial verlaufende lamellenartige Halteelemente aufweist. Somit wird vorteilhafterweise eine Steckrastverbindung geschaffen, die zudem günstig herstellbar und leicht wieder zu lösen ist. Dazu ist vorgesehen, dass als Rippen mindestens eine, bevorzugt mehrere ringförmige Rippen an einem an dem Ende des Wellrohrschlauches einstückig angeformten hohlzylinderförmigen Ansatzstück an seiner Außenseite angebracht sind, und dass das hohlzylinderförmige Ansatzstück in Steckrastposition durch Ineinanderstecken mit dem Anschlussstück verbunden ist.

Vorteilhafterweise kann das Ansatzstück der Form des Anschlußstückes derart angepaßt werden, daß es in einer Ausführungsform in das Innere der Buchse hineingesteckt werden kann bzw. in einer anderen Ausführungsform außen auf die Buchse aufgesteckt werden kann.

Wird das Anschlußstück aus Kunststoff geformt, so ergibt sich der Vorteil eines gewissen Grades an Elastizität in Verbindung mit hoher Lebensdauer.

Dadurch daß das Ansatzstück einstückig an den Wellrohrschlauch angeformt wird, wird eine langlebige dichte Verbindung von Wellrohrschlauch und Ansatzstück erreicht.

In einer besonders einfachen Ausführungsform der Haltevorrichtung ist es vorteilhafterweise vorgesehen, schon bei Ausübung eines geringen Druckes auf die oberen Enden der lamellenartigen Halteelemente ein Lösen der Steckrastverbindung zu gewährleisten.

Die zur Verriegelung dienenden Vorsprünge sind in vorteilhafter Weise in Form von Rasthaken ausgebildet. Durch die sich nach dem Inneren des Anschlußstückes verjüngende Anlagefläche der Vorsprünge wird das Einführen des Ansatzstückes leicht möglich und das gleichzeitige Öffnen der Haltevorrichtung durch Auseinanderdrücken der unteren Enden der lamellenartigen Halteelemente erreicht.

Vorteilhafterweise sind in Richtung des Endes des Ansatzstückes Nuten vorgesehen, die zur Aufnahme von O-Ring-Dichtungen dienen. Dadurch wird auf einfache Weise eine sichere Dichtheit der Steckrastverbindung erreicht.

Weitere Einzelheiten, Merkmale und Vorteile der Erfindung ergeben sich aus der nachfolgenden Beschreibung unter Bezugnahme auf die Zeichnungen. Darin zeigen
- Fig. 1: eine Schnittansicht eines erfindungsgemäßen Ansatzstückes einer ersten Ausführungsform der Steckrastverbindung, das mit einem Wellrohrschlauch verbunden ist,
- Fig. 2: eine Schnittansicht einer ersten Ausführungsform der erfindungsgemäßen Steckrastverbindung mit dem Ansatzstück aus Fig. 1,
- Fig. 3: eine Schnittansicht eines Ansatzstückes einer zweiten Ausführungsform der erfindungsgemäßen Steckrastverbindung, das mit einem Wellrohrschlauch verbunden ist,
- Fig. 4: eine Schnittansicht einer zweiten Ausführungsform der erfindungsgemäßen Steckrastverbindung mit dem Ansatzstück aus Fig. 3,
- Fig. 5: eine Schnittansicht einer dritten Ausführungsform der erfindungsgemäßen Steckrastverbindung und
- Fig. 6: eine Seitenansicht der dritten Ausführungsform der erfindungsgemäßen Steckrastverbindung von rechts gemäß Pfeil P der Fig. 5,

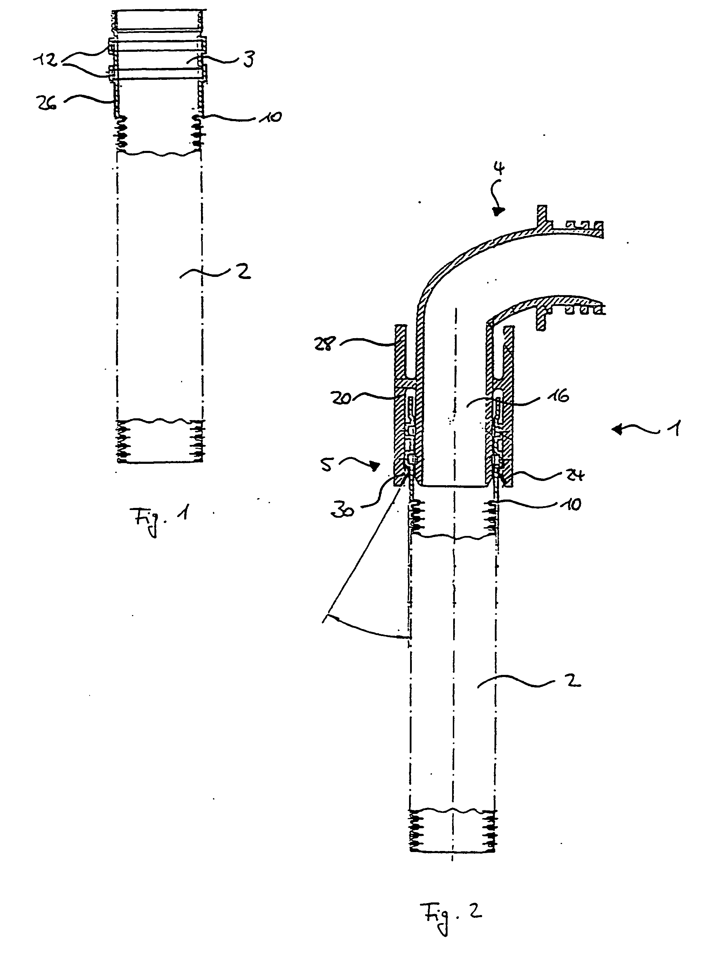

Fig. 1 zeigt einen Wellrohrschlauch 2, an dessen einem Ende 10 ein hohlzylinderförmiges Ansatzstück 3 aus Kunststoff einstückig angebracht bzw. angeformt ist. Das Ansatzstück 3 ist Teil einer bevorzugten Ausführungsform der Steckrastverbindung 1 und weist an seiner Außenseite radial um den Hohlzylinder verlaufende Rippen 12 auf. Die Materialdicke des hohlzylinderförmigen Ansatzstückes 3 ist in dieser Ausführungsform relativ gering.

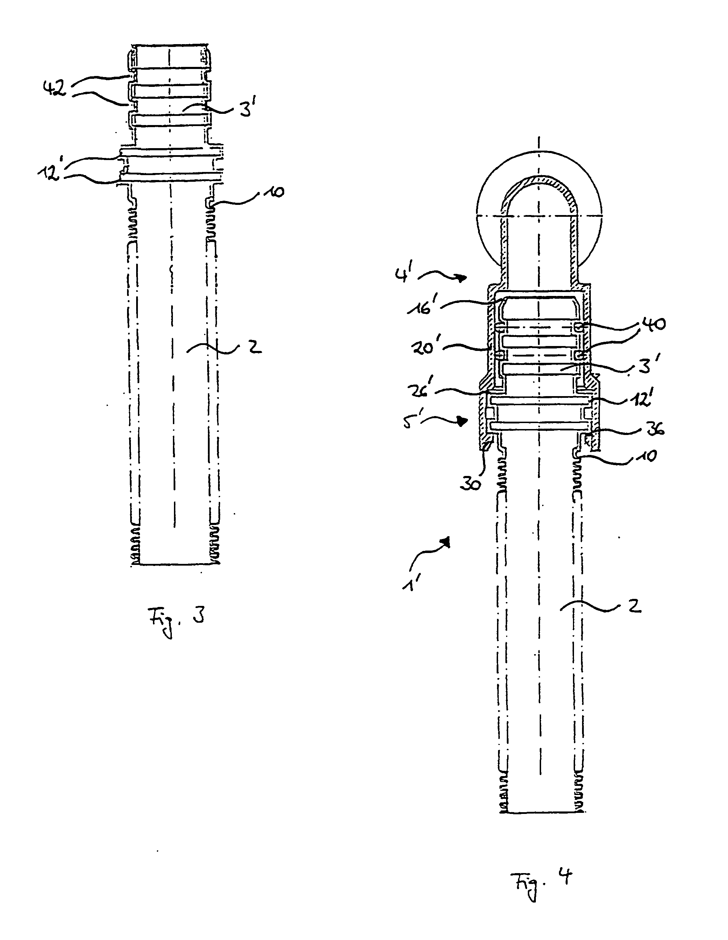

Wie aus Fig. 2 ersichtlich kommt das hohlzylinderförmige Ansatzstück 3 mit einem geeigneten Anschlußstück 4 in Verbindung, das in der Außenwand eines Haushaltsgerätes, insbesondere einer Waschmaschine, eines Waschtrockners, eines Trockners oder einer Geschirrspülmaschine anbringbar ist. In der vorliegenden Ausführungsform weist das Ansatzstück 4 eine zur Verbindung mit der Außenwand des Haushaltsgeräts dienende Verbindungsvorrichtung, eine Buchse 16 sowie eine Haltevorrichtung 5 auf. Die Haltevorrichtung 5 weist lamellenartige Halteelemente 20 auf, die in regelmäßigen Abständen radial um die hohlzylinderförmige Buchse angeordnet sind. An den unteren Enden 24 der lamellenartigen Halteelemente 20 ragt jeweils ein Vorsprung 30 mit einer sich nach dem Inneren des Anschlußstückes 4 verjüngenden Anlagefläche in Richtung der Buchse 16 über. In Richtung des oberen Endes 28 der lamellenartigen Halteelemente 20 sind diese über einen dünnen Steg mit der Außenwand der Buchse 16 verbunden. Die Wand der Buchse 16 kann aus beliebigem Material gebildet sein, während die lamellenartigen Halteelemente mit ihrem Verbindungssteg und den Vorsprüngen aus einem relativ elastischen Material, bevorzugterweise aus Kunststoff, bestehen. Bevorzugt ist das gesamte Anschlußstück 4 aus Kunststoff gebildet.

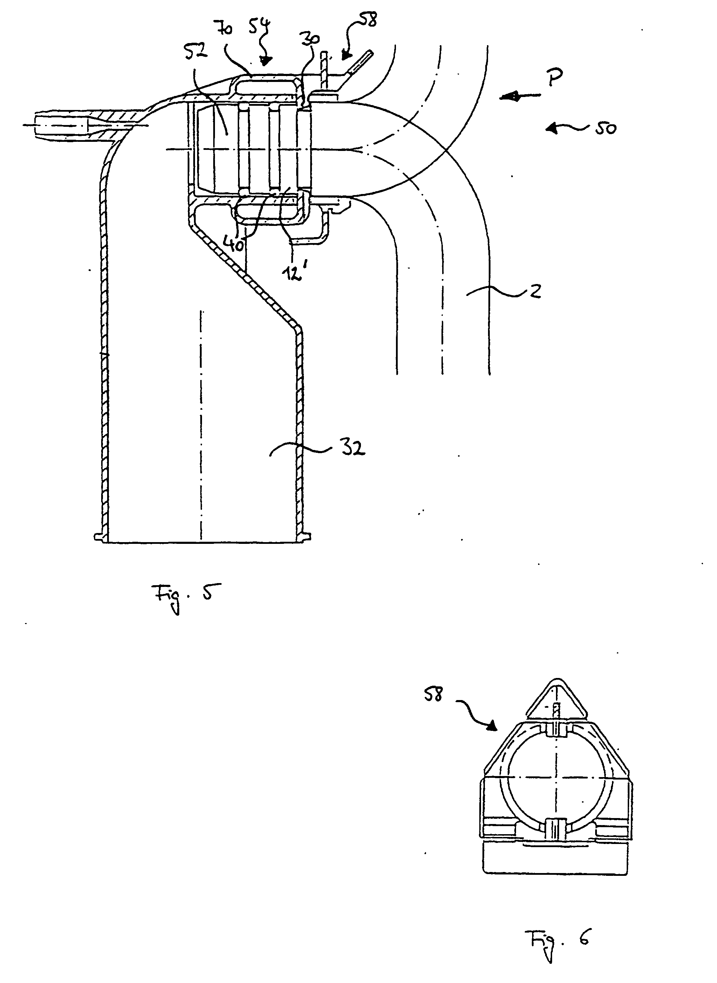

In Fig. 3 ist ein Wellrohrschlauch 2 dargestellt, an dessen oberem Ende 10 eine zweite Ausführungsform eines Ansatzstückes 3' angebracht ist. Das Ansatzstück 3' wird bevorzugterweise einstückig an den Wellrohrschlauch 2 angeformt. Es weist radial um das hohlzylinderförmige Ansatzstück 3' angeordnete Rippen 12' auf, und besitzt zudem in Richtung seines oberen Endes ebenfalls radial um das Ansatzstück 3' verlaufende Nuten 42, die zur Aufnahme von O-Ringen zur Abdichtung der Steckrastverbindung dienen. In dieser Ausführungsform weist das Wandmaterial des hohlzylinderförmigen Ansatzstückes 3' eine relativ starke Dicke auf.

In Fig. 4 ist ein an einem Wellrohrschlauch 2 angebrachtes derartiges Ansatzstück 3' mit einem Anschlußstück 4' zu einer zweiten Ausführungsform der Steckrastverbindung 1' verbunden. In dieser Ausführungsform des Anschlußstückes 4' wird die Buchse 16' direkt durch die lamellenartigen Halteelemente 20' begrenzt. Auch hier weisen die lamellenartigen Halteelemente 20' an ihrem unteren Ende nach innen ragende Vorsprünge 30 auf, die an ihrer dem Inneren des Anschlußstückes 4' zugewandten Seite eine Auflagefläche 36 liefern, auf der die an der Außenseite 26' des Ansatzstückes 3' verlaufenden Rippen 12' zur Auflage kommen. In den dafür vorgesehenen Nuten 42 am oberen Ende des Ansatzstückes 3' sind O-Ring-Dichtungen 40 aufgenommen.

In Fig. 5 ist ein Rücklaufbehälter 32 gezeigt, mit dem ein Wellrohrschlauch 2 mittels eines hohlzylinderförmigen Ansatzstückes 52 und eines im Behälter integrierten Anschlußstückes 54 gemäß einer dritten Ausführungsform der erfindungsgemäßen Steckrastverbindung 50 verbunden ist. Das Anschlußstück 54 weist eine Haltevorrichtung 58 mit lamellenartigen Halteelementen 70 auf, die mit ihren Vorsprüngen 30 mit den Rippen 12' in Eingriff stehen. In den dafür vorgesehenen radial um das Ansatzstück 52 verlaufenden Nuten 42 sind O-Ring-Dichtungen 40 aufgenommen. Eine Ansicht der Haltevorrichtung 58 gemäß Pfeil P von Fig. 5 ist in Fig. 6 dargestellt.

In der Ausführungsform gemäß Fig. 4 kann die Buchse 16' des Anschlußstückes 4' auch direkt durch die lamellenartigen Halteelemente 20' der Haltevorrichtung 5' begrenzt werden. In diesem Fall wird das hohlzylinderförmige, gegebenenfalls relativ dickwandige Ansatzstück 3', das wiederum einstückig mit dem oberen Ende 10 des Wellrohrschlauches 2 verbunden ist, in die Buchse 16' hineingesteckt. Zusätzlich sind in dieser Ausführungsform in Richtung des oberen Endes des Ansatzstückes 3' radial um dessen Außenwand verlaufende Nuten 42 vorgesehen, die zur Aufnahme von O-Ring-Dichtungen 40 dienen. Diese dichten nach dem Ineinanderstecken von Ansatzstück 3' und Anschlußstück 4' entsprechend zuverlässig und wasserdicht ab. Die Steckrastverbindung 1' wird wiederum dadurch geschaffen, daß die lamellenartigen Halteelemente 2' an ihrem unteren Ende jeweils einen Vorsprung 30 aufweisen, auf dessen Auflagefläche die Rippen 12' zu liegen kommen.

In einer speziellen dritten Ausführungsform kann die Steckrastverbindung 50 auch innerhalb des Haushaltsgerätes, etwa in einem Rücklaufbehälter 32 angebracht sein. Auch hier wird ein am Wellrohrschlauch 2 befestigtes Ansatzstück 52 in die dafür vorgesehene Buchse des Anschlußstückes 54 hineingeschoben. An lamellenartigen Halteelementen 70 angebrachte Vorsprünge 30 kommen dabei in Eingriff mit an der Außenseite des Ansatzstückes radial verlaufenden Rippen 12'. Durch geeignete Hebelvorgänge können die Vorsprünge 30 wiederum radial nach außen bewegt werden, wodurch die Haltevorrichtung 58 nicht mehr greift und der Schlauch 2 frei beweglich ist.

Des weiteren sind auch andere einfache Hebelvorrichtungen zum Entriegeln der Steckrastverbindung denkbar.

## Patentansprüche

1. Steckrastverbindung (1, 1', 50) zwischen einem Ende eines Wellrohrschlauches (2) und einem Anschlussstück (4, 4', 54), das eine zylinderförmige Buchse (16, 16', 54') und eine Haltevorrichtung (5, 5', 58) aufweist, die mit mindestens zwei, bevorzugt mehreren axial verlaufenden lamellenartigen Halteelementen (20, 20', 70) versehen ist, an deren einem Ende jeweils ein sich radial nach innen erstreckender und in Steckrastposition mit wellrohrseitigen Rippen (12, 12') in Eingriff befindlicher Rastvorsprung (30) vorgesehen ist, der durch einen Hebelvorgang am Halteelement (20, 20', 70) nach außen bewegbar und außer Eingriff mit den Rippen (12, 12') bringbar ist, **dadurch gekennzeichnet, dass** als Rippen mindestens eine, bevorzugt mehrere ringförmige Rippen (12, 12') an einem an dem Ende (10) des Wellrohrschlauches (2)) einstückig angeformten hohlzylinderförmigen Ansatzstück (3, 3', 52) an seiner Außenseite (26, 26') angebracht sind, und dass das hohlzylinderförmige Ansatzstück (3, 3', 52) in Steckrastposition durch Ineinanderstecken mit dem Anschlussstück (4, 4', 54) verbunden ist.

2. Steckrastverbindung nach Anspruch 1, **dadurch gekennzeichnet, dass** das hohlzylinderförmige Ansatzstück (3) *in Steckrastposition* außen *über* der Buchse (16) *positioniert ist*.

3. Steckrastverbindung nach Anspruch 1, **dadurch gekennzeichnet, dass** das hohlzylinderförmige Ansatzstück (3', 52) *in Steckrastposition innerhalb* der Buchse (16') *positioniert ist.*

4. Steckrastverbindung nach einem der Ansprüche 1 bis 3, **dadurch gekennzeichnet, dass** das Anschlussstück (4, 4') in der Außenwand eines Haushaltgeräts, insbesondere einer Waschmaschine, eines Waschtrockners, eines Trockners oder einer Geschirrspülmaschine, angebracht ist.

5. Steckrastverbindung nach einem der Ansprüche 1 bis 3, **dadurch gekennzeichnet, dass** das Anschlussstück (54) mit einem Rücklaufbehälter (32) in einem Haushaltgerät vorzugsweise einteilig verbunden ist.

6. Steckrastverbindung nach einem der Ansprüche 1 bis 5, **dadurch gekennzeichnet, dass** das Anschlussstück (4, 4', 54) aus Kunststoff *besteht*.

7. Steckrastverbindung nach einem der Ansprüche 1 bis 6, **dadurch gekennzeichnet, dass** bei Ausübung *eines Hebelvorgangs auf die freien Enden* (28) der lamellenartigen Halteelemente (20) die *Rastvorsprünge* (30) gemeinsam nach außen *bewegbar sind* und ***dadurch** die Rastverbindung lösbar ist.*

8. Steckrastverbindung nach einem der Ansprüche 1 bis 7, **dadurch gekennzeichnet, dass** die *Rastvorsprünge* (30) *eine zum offenen Ende* des Anschlussstückes (4, 4', 54) *schräge Anlauffläche* aufweise.

9. Steckrastverbindung nach einem der Ansprüche 1 bis 8, **dadurch gekennzeichnet, dass** *am in Steckrastposition tief in* das Anschlussstück (4, 4', 54) *eindringenden Ende* des Ansatzstückes (3', 52) *Nute (42) zur Aufnahme von O-Ring-Dichtungen (40)* vorgesehen sind.

## Claims

1. Plug detent connection (1, 1', 50) between an end of a corrugated pipe hose (2) and a connecting member (4, 4', 54), which comprises a cylindrical bush (16, 16', 54') and a retaining device (5, 5', 58), which is provided with at least two, preferably several, axially extending plate-like retaining elements (20, 20',70), at one end of each of which is provided a respective radially inwardly extending detent projection (30), which in plug detent position is disposed in engagement with ribs (12, 12') at the corrugated pipe and which can be moved outwardly and brought out of engagement with the ribs (12, 12') by a levering process at the retaining element (20, 20', 70), **characterised in that** at least one annular rib (12, 12'), preferably several annular ribs (12, 12'), is or are formed as ribs at a hollow-cylindrical extension member (3, 3', 52), which is integrally formed at the end (10) of the corrugated pipe hose (2), at its outer side (26, 26') and that the hollow-cylindrical extension member (3, 3', 52) is connected with the connecting member (4, 4', 54) in plug detent position by plugging into one another.

2. Plug detent connection according to claim 1, **characterised in that** the hollow-cylindrical extension member (3) in plug detent position is positioned externally over the bush (16).

3. Plug detent connection according to claim 1, **characterised in that** the hollow-cylindrical extension member (3', 52) in plug detent position is positioned within the bush (16').

4. Plug detent connection according to one of claims 1 to 3, **characterised in that** the connecting member (4, 4') is formed in the outer wall of a domestic appliance, particularly a washing machine, washer-drier, drier or dishwashing machine.

5. Plug detent connection according to one of claims 1 to 3, **characterised in that** the connecting member (54) is connected, preferably integrally, with a return flow container (32) in a domestic appliance.

6. Plug detent connection according to one of claims 1 to 5, **characterised in that** the connecting member (4, 4', 54) consists of plastics material.

7. Plug detent connection according to one of claims 1 to 6, **characterised in that** on exertion of a levering process on the free ends (28) of the plate-like retaining elements (20) the detent projections (30) are movable outwardly in common and the detent connection is thereby releasable.

8. Plug detent connection according to one of claims 1 to 7, **characterised in that** the detent projections (30) have inclined entry surfaces towards the open end of the connecting member (4, 4', 54).

9. Plug detent connection according to one of claims 1 to 8, **characterised in that** grooves (42) for reception of O-ring seals (40) are provided at the end, which in plug detent position penetrates deep into the connecting member (4, 4', 54), of the extension member (3', 52).

## Revendications

1. Liaison (1, 1', 50) d'enfichage à encliquetage entre l'extrémité d'un tuyau annelé (2) et une pièce de raccordement (4, 4', 54) qui présente une douille cylindrique (16, 16', 54') et un dispositif de maintien (5, 5', 58) doté d'au moins deux et de préférence de plusieurs éléments de maintien (20, 20', 70) du type en lamelle qui s'étendent axialement et à une extrémité de chacun desquels est prévue une saillie d'encliquetage (30) qui s'étend radialement vers l'intérieur et qui, en position d'enfichage à encliquetage, est en relation d'engagement avec des nervures (12, 12') du côté du tuyau et que l'on peut déplacer vers l'extérieur et séparer des nervures (12, 12') en exécutant une action de levier sur l'élément de maintien (20, 20', 70), **caractérisée en ce que**, comme nervures, au moins une et de préférence plusieurs nervures annulaires (12, 12') sont agencées sur le côté extérieur (26, 26') d'un appendice (3, 3', 52) en forme de cylindre creux moulé d'un seul tenant sur l'extrémité (10) du tuyau annelé (2) et **en ce que**, dans la position d'enfichage à encliquetage, l'appendice (3, 3', 52) en forme de cylindre creux et la pièce de raccordement (4, 4', 54) sont reliés l'un à l'autre par enfichage mutuel.

2. Liaison d'enfichage à encliquetage selon la revendication 1, **caractérisée en ce qu'**en position d'enfichage à encliquetage, l'appendice (3) en forme de cylindre creux est positionné sur l'extérieur de la douille (16).

3. Liaison d'enfichage à encliquetage selon la revendication 1, **caractérisée en ce qu'**en position d'enfichage à encliquetage, l'appendice (3', 52) en forme de cylindre creux est positionné à l'intérieur de la douille (16').

4. Liaison d'enfichage à encliquetage selon l'une des revendications 1 à 3, **caractérisée en ce que** la pièce de raccordement (4, 4') est montée dans la paroi extérieure d'un appareil électroménager et en particulier d'un lave-linge, d'un sèche-linge, d'un séchoir ou d'un lave-vaisselle.

5. Liaison d'enfichage à encliquetage selon l'une des revendications 1 à 3, **caractérisée en ce que** la pièce de raccordement (54) est reliée de préférence d'un seul tenant à un réservoir (32) de reprise d'eau d'un appareil électroménager.

6. Liaison d'enfichage à encliquetage selon l'une des revendications 1 à 5, **caractérisée en ce que** la pièce de raccordement (4, 4', 54) est réalisée en matière synthétique.

7. Liaison d'enfichage à encliquetage selon l'une des revendications 1 à 6, **caractérisée en ce que** l'exécution d'une action de levier sur les extrémités libres (28) des éléments de maintien (20) du type en lamelle permet de déplacer ensemble les saillies d'encliquetage (30) vers l'extérieur et de libérer ainsi la liaison d'encliquetage.

8. Liaison d'enfichage à encliquetage selon l'une des revendications 1 à 7, **caractérisée en ce que** les saillies d'encliquetage (30) présentent une surface d'arrêt inclinée vers l'extrémité ouverte de la pièce de raccordement (4, 4', 54).

9. Liaison d'enfichage à encliquetage selon l'une des revendications 1 à 8, **caractérisée en ce que** des rainures (42) destinées à recevoir des joints toriques d'étanchéité (40) sont prévues sur l'extrémité de l'appendice (3', 52), qui, en position d'enfichage à encliquetage, pénètre profondément dans la pièce de raccordement (4, 4', 54).
